# EUROPEAN PATENT APPLICATION

(11) **EP 4 738 344 A1**
(43) Date of publication of application: **06.05.2026**
(21) Application number: 24210273.9
(22) Date of filing: 31.10.2024
(51) Int. Cl.: G10K 15/02

(54) **METHOD FOR GENERATING OUTPUT DATA INDICATIVE OF AN OUTPUT SOUND FOR A WARNING DEVICE OF A VEHICLE, DATA PROCESSING APPARATUS, COMPUTER PROGRAM, COMPUTER-READABLE STORAGE MEDIUM, SOUND SYSTEM FOR A VEHICLE, USE OF OUTPUT DATA IN A SOUND SYSTEM OF A VEHICLE, AND VEHICLE**

(71) Applicant: Volvo Car Corporation, 405 31 Göteborg (SE)
(72) Inventor: RÖTZ, Markus, 40531 Göteborg (SE); EWALD, Jonatan, 40531 Göteborg (SE)
(74) Representative: Kransell & Wennborg KB

(57) **Abstract**

The disclosure relates to method for generating output data indicative of output sound for warning device of vehicle. The method comprises: obtaining first data indicative of a first partial of a sound characterized by a first frequency; obtaining second data indicative of a second partial of the sound characterized by a second frequency; and obtaining the output data indicative of the output sound by combining the first data and the second data. The combining comprises phase shifting the first partial of the sound and the second partial of the sound with respect to one another, wherein value indicative of power and/or energy of the output sound is higher than value indicative of power and/or energy of the sound. Furthermore, the disclosure relates to; a data processing apparatus; a computer program; a computer-readable storage medium; a sound system for a vehicle; a use of output data, generated by executing the method; and to a vehicle.

## Description

### TECHNICAL FIELD

The present disclosure relates to a method for generating output data indicative of an output sound for a warning device of a vehicle.

Furthermore, the present disclosure is directed to a data processing apparatus, a computer program and a computer-readable storage medium.

The present disclosure is also directed to a sound system for a vehicle.

Moreover, the present disclosure is directed to a use of output data, generated by executing the method, and to a vehicle.

### BACKGROUND ART

There are many requirements that are to be met with regard to a sound, output of which is caused by a warning device of a vehicle. The warning output sounds, i.e., sounds outputs of which are caused by warning devices of the vehicles, require a certain sound pressure level to be achieved when output. A well-known example of vehicle warning signals are horn signals having sounds that are automatically recognized by people as a horn because of their typical sound characteristics.

A new technology has emerged recently, which uses loudspeakers for outputting warning signals/sounds instead of a traditional warning outputting devices such as signal horns. Using a loudspeaker for outputting warnings requires an entirely different signal chain compared to the traditional warning outputting device. According to the new technology, a warning sound or a corresponding warning sound file respectively is played back through an amplifier and the loudspeaker itself. In view of this, the warning sound or a corresponding warning sound file respectively needs to be carefully designed such that it fulfills specific requirements of the loudspeaker. The requirements comprise, for example, sound pressure level and frequency content. The more power and/or energy the sound or the sound file contains the better are the pre-requisites for the rest of the signal chain for outputting/playing back the output sound or output signal file respectively.

Thus, when moving from traditional warning outputting devices such as traditional signal horns to powerful loudspeakers for outputting/playing back corresponding warnings, warning sounds or warning sound files respectively are required that comply with the requirements of the loudspeakers that play back/output the warning sounds or warning sound files. The warning sounds or warning sound files respectively require a correspondingly increased power and/or energy level. This, however, may be problematic because increasing the energy/power content of a specific sound file leads to a coincident introduction of additional artifacts and harmonics into the sound/sound file. The additional artifacts and harmonics change the characteristics of the sound/sound file significantly. The known methods implement clipping of the sound, which cuts the waveform off and adds unwanted harmonics into the sound.

### SUMMARY

It is an objective of the present disclosure to improve sounds or sound files for outputting by a warning device of a vehicle. The improvement may comprise, for example, increasing the energy and/or power level in a sound (e.g. in a sound of a sound file) without changing the characteristics of the sound.

The problem is at least partially solved or alleviated by the subject matter of the independent claims of the present disclosure, wherein some of possible further examples are incorporated in the dependent claims.

According to a first aspect, there is provided a method for generating output data indicative of an output sound for a warning device of a vehicle. According to the present disclosure, the method comprises: obtaining first data indicative of a first partial of a sound characterized by a first frequency; obtaining second data indicative of a second partial of the sound characterized by a second frequency; and obtaining the output data indicative of the output sound by combining the first data and the second data, wherein the combining comprises a phase shifting of the first partial of the sound and the second partial of the sound with respect to one another, and wherein a value indicative of power and/or energy of the output sound is higher than a value indicative of power and/or energy of the sound. According to the present disclosure, output data indicative of an output sound may comprise an output sound, i.e., data of the output sound as well as an output sound file, which comprises the output sound, i.e., the data of the output sound. A partial of a sound is a frequency of the sound. The sounds, considered herein, are composed of many (at least two) frequencies, which are referred to as partial tones or partials. Generally, as well known, a partial of a sound is an individual sinusoidal component that makes up a corresponding tone of the sound. Each partial represents a specific frequency within the sound. Some examples of sound partials will be exemplary described in more detail below. The terms of power of a sound and energy of a sound are well known. A value indicative of power and/or energy of the sound may be a value that indicates the level of the power and/or energy in the sound. By the features of the first aspect, energy and/or power level of a sound may be increased significantly without changing the characteristics of the sound. Moreover, the output signal may be provided such that it meets specific requirements (e.g., sound pressure level and/or frequency content) of at least one loudspeaker of a vehicle, which will be caused by the warning device of the vehicle to output the output sound.

In an example, the value indicative of power and/or energy of a sound may be obtained based on a root-mean-square value, RMS, and/or a crest factor. According to the present disclosure also other values or factors may be utilized that are capable of indicating the power and/or energy level in a sound. The RMS and the crest factor are well known measures and are well suited for indicating sound power and/or energy levels. Their user simplify obtaining the indication of the energy and/or power level in the sound.

In an example, the method further may comprise obtaining at least one further data each indicative of a corresponding further partial of the sound characterized by a corresponding frequency, wherein the obtaining the output data indicative of the output sound comprises combining the first data, the second data, and the at least one further data by phase shifting of the first partial of the sound, the second partial of the sound, and the at least one further partial of the sound with respect to one another, and wherein the value indicative of power and/or energy of the output sound is higher than the value indicative of power and/or energy of the sound. In this way, complex sounds comprising multiple partials may be handled according to the present disclosure in an efficient and effective manner.

In an example, the obtaining of the output data indicative of the output sound may be performed by applying an optimization algorithm. An optimization algorithm is a computational method designed to find the best solution to a problem, which herein is finding an appropriate phase for a partial of a sound such that, upon the phase shifting, the resulting output sound has the best (highest and/or appropriate) power and/or energy value. According to an example of the present disclosure, the optimization algorithm may have an objective of maximizing the value indicative of power and/or energy of the output sound. The use of the optimization algorithm has the advantage of finding the optimal solution quickly and efficiently. It enables a quick and resource saving analysis of different possible phase shifts of the partials of a sound.

In an example, upon the obtaining of the output data indicative of the output sound, the method may comprise: storing the output data as a sound file; and/or providing the sound file or the output data for outputting by the warning device of vehicle; and/or causing outputting of the sound file or the output sound, of which the output data is indicative by the vehicle. In this way, different ways of further handling of the resulting output data are enabled. A sound file is a file that stores sound data or data indicative of a sound respectively.

In an example, the first data may be indicative of a sine wave of the first frequency and the second data may be indicative of a sine wave of the second frequency. The handling of the sine waves of the frequencies simplifies the processing of the sound data, particularly of data indicative of different partials of the sound.

According to a second aspect, there is provided a data processing apparatus comprising means for carrying out the steps of the method of the first aspect.

According to a third aspect, there is provided a computer program comprising instructions which, when the program is executed by a computer, cause the computer to carry out the steps of the method of the first aspect.

According to a fourth aspect, there is provided a computer-readable storage medium comprising instructions which, when executed by a computer, cause the computer to carry out the steps of the method of the first aspect.

According to a fifth aspect, there is provided a sound system for a vehicle comprising a loudspeaker, wherein the sound system is configured for: obtaining output data indicative of an output sound, generated by the data processing apparatus according to the second aspect; and causing the loudspeaker of the vehicle to output the output sound.

According to a sixth aspect, there is enabled a use of output data, generated by executing the steps of the method of the first aspect, in a sound system of a vehicle.

According to a seventh aspect, there is provided a vehicle comprising the sound system according to the fifth aspect.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a data processing apparatus and a vehicle, both arranged according to an example of the present disclosure;

- Figure 2A: shows a sound comprising multiple partials according to an example of the present disclosure;
- Figure 2B: shows a sound comprising multiple partials according to an example of the present disclosure;
- Figure 3: shows first data indicative of a first partial of a sound characterized by a first frequency and second data indicative of a second partial of the sound characterized by a second frequency, wherein the first data and the second data are arranged according to an example of the present disclosure;
- Figure 4: visualizes obtaining output data indicative of an output sound for a warning device of a vehicle, wherein the obtaining of the output data is performed by combining the first data and the second data according to an example of the present disclosure;
- Figure 5: shows steps of the method according to the present disclosure for generating output data indicative of an output sound for a warning device of a vehicle; and
- Figure 6: shows steps of the method according to the present disclosure for generating output data indicative of an output sound for a warning device of a vehicle.

### DETAILED DESCRIPTION

The Figures are merely schematic representations and serve only to illustrate examples of the disclosure. Identical or equivalent elements are in principle provided with the same reference signs.

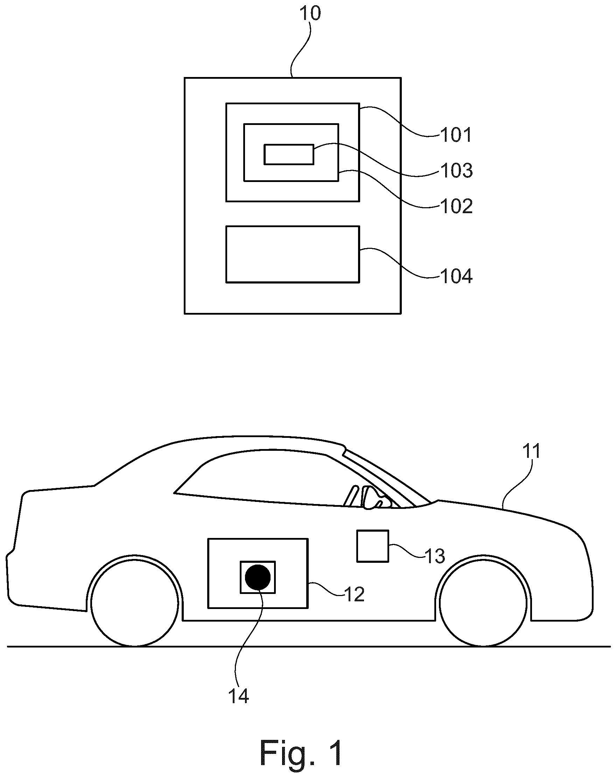

Figure 1 shows an exemplary implementation of a data processing apparatus 10 and a vehicle 11. The vehicle 11 comprises a warning device 13. The warning device may cause outputting of an output sound, wherein the outputting may be playing back the sound. The output sound is referred to herein also as warning sound. Further, the output sound may be stored in an output sound file. Thus, the warning device 13 may correspondingly cause outputting (playing back) an output sound file. In view of this, when the processing of a sound, i.e. of data indicative of a sound, is described in the following, the disclosure encompasses also processing of data of a sound file, which is indicative of the sound. Thus, the sound or data indicative of a sound respectively may be a corresponding sound or data indicative of the sound in a sound file. According to the disclosure, the vehicle 11 further comprises a sound system 12. The output of the output/warning sound or output/warning sound file respectively is performed via the sound system 12. The sound system 12 comprises at least one loudspeaker 14 and is arranged to cause the at least one loudspeaker 14 to output/play back the output/warning sound or output/warning sound file respectively.

The warning device 13 may be any device of the vehicle 11, which may obtain an indication for a warning situation and then cause a corresponding output of (playing back) a corresponding warning sound or warning sound file respectively. For example, the warning device 13 may cause the sound system 12 to output the warning sound or warning sound file respectively. The sound system 12 may then cause at least one of its loudspeakers 14 to output the warning sound or warning sound file respectively.

The warning device 13 may be arranged in different ways. For example, the warning device 13 may be a device for causing horn signal outputs. In this case, the warning device 13 may receive an indication for causing an output of a horn sound/horn sound file as an output/warning sound via a corresponding at least one loudspeaker 14 of the sound system 12, arranged for outputting horn sounds. The indication may be provided by the driver of the car. Further, it may be provided automatically in an autonomous car. The warning device 13 may be also any other correspondingly arranged device of the vehicle 11 such as an anti-theft device, seatbelt reminder, a door ajar warning device, headlight reminder, parking sensors warning device, reverse warning system, warning device of an advanced driver assistance system (ADAS), a corresponding warning device of an acoustic vehicle alerting system (AVAS), aftermarket warning device, etc.

The loudspeaker(s) 14 involved in the outputting of a respective output sound have corresponding sound-related requirements that have to be met by sounds/sound files that the loudspeaker(s) 14 output/play back. The requirements relate to sound pressure level and frequency content. Particularly, the output sounds should have an appropriate power and/or energy level defined in the requirements of the loudspeaker(s) 14. The power of a sound is a well-known measure and is referred to also as acoustic power. The power of a sound is the rate a at which sound energy is emitted, reflected, transmitted, or received per unit time. It describes the total sound energy output. The sound energy is a form of mechanical energy transmitted by vibrating the particles of the various media the sound waves pass through and refers to the amount of energy carried by sound waves. The energy of a sound played back by a loudspeaker 14 is directly related to its sound power, and the loudspeakers 14 have limits on the amount of electrical energy they can convert to sound energy without damage or distortion. Thus, the output/warning sounds to be output by the loudspeaker(s) 14 of the vehicle 11 need to be to be designed such that they fulfill the loudspeaker specific requirements.

The present disclosure describes a methodology of increasing the power of a specific output sound, which will be played back/output by the loudspeaker(s) 14, without changing the characteristics of the sound itself. As indicated above, a sound or data indicative of the sound respectively may be stored in a sound file. Thus, the disclosure correspondingly relates also to a sound or data indicative of the sound stored in a sound file. Generally, according to the present disclosure, it is done by adjusting the phase relationships between different frequencies of a sound/, wherein phase of at least one frequency of the sound is phase shifted. Further, optimization algorithms may be used for determining optimal phase shifts for frequencies of a sound. This helps to push the power and/or energy of the output sound to its maximum without impacting the character of the sound. The methodology described herein increases the energy content of an output sound significantly without changing the characteristics of the sound. No new harmonics or artifacts are added to the output sound when designing it with regard to the requirements of the loudspeaker(s) 14. The output sound may be designed in order to achieve the highest possible sound pressure levels. According to the present disclosure, adjusting or phase shifting of (waves of) frequencies may be performed with regard to a sound file. In this case, the adjusting or phase shifting of the (waves of) frequencies of the sound is performed, which or data indicative of which is stored in the sound file.

The data processing apparatus 10 is arranged for generating output data indicative of an output sound for a warning device 13 of the vehicle 11.

The data processing apparatus 10 comprises a data storage unit 101 and a data processing unit 104.

The data storage unit 101 comprises a computer-readable storage medium 102.

On the computer-readable storage medium 102, there is provided a computer program 103.

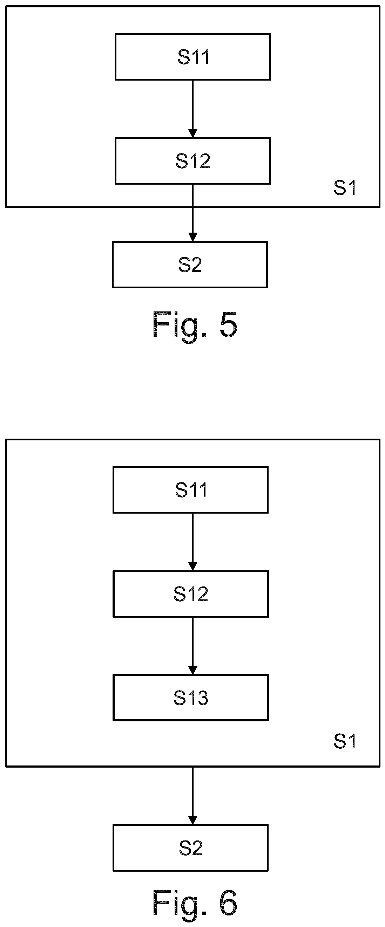

The computer program 103 and, thus, also the computer-readable storage medium 102, comprise instructions which, when executed by the data processing unit 104, or, more generally speaking, a computer, cause the computer or the data processing unit 104 to carry out a method for generating output data indicative of an output sound for the warning device 13 of the vehicle 11. The steps of the method are described exemplary in more detail with regard to Figures 5 and 6.

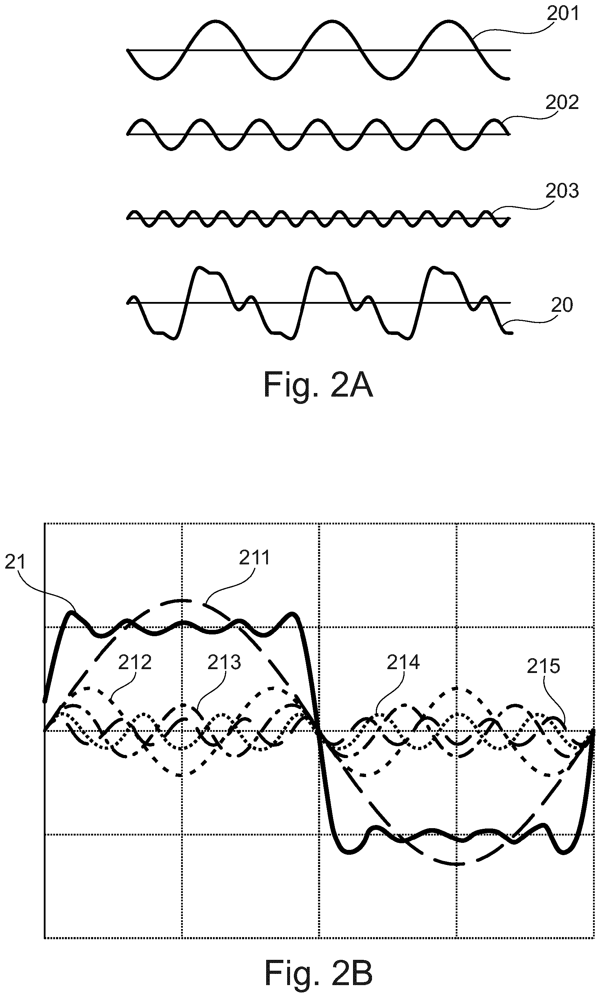

The sounds, considered herein, are composed of many (at least two) frequencies, which are referred to as partial tones or partials. As well known, a partial of a sound is an individual sinusoidal component that makes up a corresponding tone of the sound. Each partial represents a specific frequency within the sound. Thus, each partial/frequency within the sound contributes to its overall timbre or tone. This is exemplary visualized in Figures 2A and 2B.

In the example of Figure 2A, three partials 201, 202, 203 (see the above three sinusoidal waves (sine waves) of frequencies) form a sound with its composite wave 20 shown in Figure 2A below. The composite wave 20 of the sound is obtained by summing/adding the three partials/frequencies.

In the example of Figure 2B, five partials (see the sine waves of frequencies) 211, 212, 213, 214, 215 form the composite wave 21 of the sound obtained by summing/adding the five partials/frequencies.

Thus, according to the present disclosure, a sound may comprise different numbers (at least two) of partials/frequencies and is not limited to partial/frequency numbers discussed exemplary herein with regard to individual examples of the disclosure.

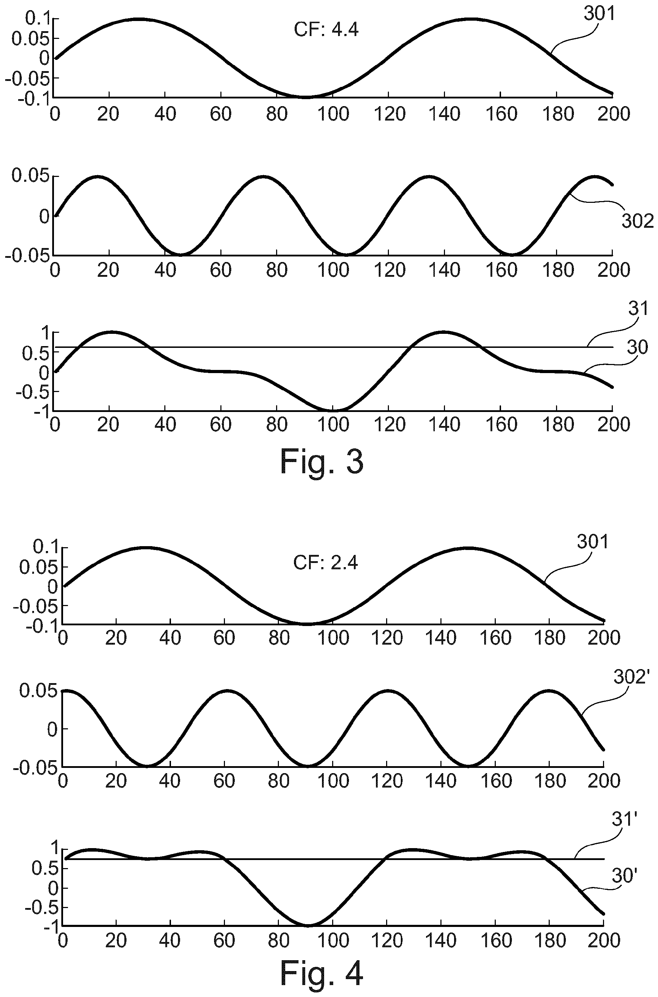

In the following, for the sake of better understanding, a sound comprising only two different frequencies will be considered for explaining the generating of output data for the loudspeaker(s) 14 of the vehicle 11. Figure 3 shows three plots. The first two plots from the top show sine waves of two frequencies/partials 301, 302 of a sound. The plot to the bottom of Figure3 shows the sum 30 of the sine waves of the two frequencies/partials (i.e. the composite wave 30 of the sound) after adding the sine waves of the two frequencies/partials together. The line 31 over the composite wave 30 of the sound shows a Root-Mean-Square (RMS) value of the sound. The RMS can be understood as a continuous average of the sound. Particularly, it indicates the average loudness or power of the sound over time. The RMS value reflects also the overall energy content of the waveform of the sound over time. The higher the RMS value is the more power and energy are in the sound. The sound may be created in a digital domain and the maximum amplitude of the sound that may be achieved may be from -1 to 1. In the example of Figure 3, both of the two frequencies/partials 301, 302 start with their phase being at 0 and achieve a RMS value of around 0.6 in the sound when added up. Thus, the sound has the RMS value 31, which is indicative of the power and/or energy of the sound (with the composite wave 30), of around 0.6.

Generally, when the overall amplitude of the summed/composed sound 30 would be increased so that it exceeds its maximum of 1 or -1, the parts of the sound exceeding the maximum would be clipped. This would introduce additional harmonics and, hence, change the character of the sound.

The present disclosure does not use the clipping but instead suggests focusing on the phase relation of each of the single partials/frequencies contained in the sound. Thereby, harmonically rich and steady sounds may be created. Particularly, the present disclosure suggests rearranging the phase relation of the frequencies/partials of a sound. Thereby, the frequencies/partials will add up more efficiently and increase the energy content and the power in the sound while having minimum impact in the character of the sound. The characteristics of the sound are thereby maintained.

In Figure 4 the same two frequencies/partials as provided in Figure 3 can be seen at the top but this time the second one 302' is phase shifted by 90 degrees. The bottom plot of Figure 4 displaying the composite wave 30' of the output sound, obtained upon the phase shifting, shows that the phase shift leads to a different sum of the frequencies/partials 301, 302'. In the example of Figure 4, the two frequencies/partials 301, 302' add up in a more efficient way and the RMS value 31', which is indicative of the power and/or energy of the sound (with the composite wave 30') obtained upon the phase shifting, increases from 0.6 to 0.76 compared to before (i.e. the example in Figure 3) without clipping parts of the composite wave 30, 30' of the sound or changing of the character of the sound. The RMS value 31' of the output sound 30', obtained by the phase shifting in Figure 4, may be now played back/output by the loudspeaker(s) 14 more efficiently, and its loudness is increased slightly.

The approach, explained above regarding a sound with two partials/frequencies 301, 302, is correspondingly applicable to an unlimited number of partials/frequencies with corresponding sine waves, wherein each of the partials/frequencies may even have different amplitudes.

Figure 5 shows steps of the method according to the present disclosure for generating output data indicative of an output sound for a warning device 13 of a vehicle 11. The description of Figure 5 follows on from the above explanations regarding Figures 3 and 4 and, for the sake of better understanding, considers a sound (e.g., a sound, data of which is stored in sound file) comprising two partials/frequencies.

In step S1, data indicative of partials of a sound is obtained. For example, the data processing apparatus 10 obtains the data from its data storage unit 101 and/or from an external storage device such as server or database (now shown in Figure 1) arranged for storing sound data. According to an example, the data may be, for example, a sound file comprising the sound. For performing the adaptation of the sound (e.g., sound, data of which is stored in a sound file) with regard to its energy and/or power values, step S1 comprises substeps S11 and S12. In step S 11, first data indicative of a first partial of the sound characterized by a first frequency is obtained. In step S12, second data indicative of a second partial of the sound characterized by a second frequency is obtained. When exemplary considering the above-discussed examples of Figures 3 and 4, in step S1, the (data of the) sound 30, for example, may be obtained. Thus, in step S11 (data of) partial 301 will be obtained and in step S12 (data of) partial 302 will be obtained.

In step S2, output data indicative of the output sound, arranged for outputting by the loudspeaker(s) 14 of the sound system 12 of the vehicle 11 is obtained. The output sound (with its composite wave) is obtained by combining the first data and the second data, wherein the combining comprises a phase shifting of the first partial of the sound and the second partial of the sound with respect to one another (see partials 301 and 302' of Figure 4, for example). As explained above, according to the disclosure, the combining may comprise summing up/adding the partials/frequencies phase shifted with respectively to one another. A composite wave of the output sound may be obtained then (see composite wave/output sound 30' of Figure 4, for example). Upon the combining, a value indicative of power and/or energy of the output sound should be higher than a value indicative of power and/or energy of the sound. This means that, according to the present disclosure, the phase shifting may comprise finding phase shifting of at least one of the partials such that the value indicative of power and/or energy of the output sound (obtained by the phase shifting) is higher than the value indicative of power and/or energy of the sound (partials of which are obtained in step S1). As explained above, according to the present disclosure, the values may be obtained based on the composite waves of the output sound (see in Figures 3 and 4 the composite waves 30 and 30').

In view of the explanations provided with regard to Figures 3 and 4, step S2 of obtaining the output sound, comprises performing phase shifting with regard to at least one of the two partials/frequencies of the sound obtained in step S1. The objective of the phase shifting is to increase the power and/or energy of the output sound (expressible by its composite frequency). Thus, it is verified among different possibilities of phase shifting on the partials/frequencies of the sound obtained in step S1, which one of the different possibilities will lead to an increase of the power and/or energy in the output sound and/or which one of them will lead to a highest possible and/or highest appropriate increase of the power and/or energy in the output sound. The phase shifting of the partials/frequencies with regard to one another, which leads to the desired increase of the power and/or energy in the output sound and/or to a highest possible and/or highest appropriate increase of the power and/or energy in the output sound, is then used for executing step S2. The highest appropriate increase of the power and/or energy in the output sound means that the power and/or energy in the output sound complies with the requirements of the loudspeaker(s) 14 of the sound system 12, e.g. is below corresponding threshold values for energy and/or power permitted for a sound signal for outputting/playing back by the loudspeaker(s) 14.

The value(s) indicative of the energy and/or power of a sound and of an output sound may be obtained, for example, based on the RMS value, as explained above, or based on a crest factor, wherein also other criteria for determining sound energy and/or sound power may be used. According to the present disclosure, the value(s) may be obtained based on the respective composite sound waves.

As explained above, higher RMS values indicate higher energy and higher power presence in comparison to lower RMS values, which correspondingly indicate lower energy and lower power presence. The RMS value may be obtained with regard to the composite wave of the sound. As shown above with regard to examples of Figures 3 and 4, a corresponding RMS Value may be determined with regard to both the sound (e.g., the composite wave of the sound) having the partials as obtained in step S1 and the output sound (e.g., the composite wave of the output sound), obtained upon phase shifting (and adding the partials). Based on the RMS values, the value(s) indicative of the energy and/or power of both the sound and the output sound may be obtained (concluded). According to an example, the value indicative of the energy and/or power of the sound may be the RMS value determined with regard to the sound (e.g., the composite wave of the sound) having the partials as obtained in step S1, and the value indicative of the energy and/or power of the output sound may be the RMS value determined with regard to the output sound (e.g., the composite wave of the output sound) having the partials as obtained upon the phase shifting. Thus, the objective when performing the phase shifting may be increase of the RMS value for the output sound.

The crest factor is a well-known parameter and describes the relationship between the peak value and the root mean square (RMS) value of a waveform. Typically, crest factor for a high energy sound is lower compared to less energetic or more dynamic sounds. Thus, lower crest factor values indicate higher energy and higher power presence in comparison to higher crest factor values, which correspondingly indicate lower energy and lower power presence. According to an example, a corresponding crest factor may be determined with regard to both the sound (e.g., the composite wave of the sound) having the partials as obtained in step S 1 and the output sound (composite wave of the output sound), obtained upon phase shifting (and adding the partials). When relaying on the crest factor, the value indicative of the energy and/or power of the output sound will be higher than the value indicative of the energy and/or power of the sound when the crest factor obtained/calculated for the (composite wave of the) output sound is lower than the crest factor obtained/calculated for the (composite wave of the) sound. Thus, the objective when performing the phase shifting may be reduction of the crest factor for the output sound.

According to an example of the present disclosure, the value indicative of the energy and/or power of the sound may be obtained/determined based on the crest factor of the sound and the value indicative of the energy and/or power of the output sound may be obtained/determined based on the crest factor of the sound. The methods for determining the respective energy and/or power indicating values are well known and any of the methods may be utilized according to the present disclosure. For example, the methods may include obtaining/determining respective RMS values for the sound and the output sound and may obtain/determine the respective energy and/or power of the sound and of the output sound based on the respective RMS values and crest factors.

Thus, in step S2, the phase shifting of the partials/frequencies of the sound with respect to one another (with adding/summing of the partials/frequencies obtained by the phase shifting) result in a composite wave or an output sound respectively, energy and/or power (values) of which are higher than energy and/or power (values) of the original sound, data of which has been obtained in step S1.

Figure 6 shows steps of the method according to the present disclosure for generating output data indicative of an output sound for a warning device 13 of a vehicle 11. The steps of Figure 6 are generally executed in the same way as the steps of Figure 5. The difference between the disclosures of Figures 5 and 6 is the number of partials/frequencies of the sound obtained in step S1. Step S1 of Figure 6 comprises additionally sub-step S13, where at least one further data, each indicative of a corresponding further partial of the sound characterized by a corresponding frequency, is obtained. Thus, the sound with the sound obtained in step S1 comprises more than two partials/frequencies.

Step S2 of Figure 6 is executed in the same way as step S2 of Figure 5. In step S2 of Figure 6, the combining of the partial/frequency data is performed with regard to all partials/frequencies obtained in step S1, which in comparison to Figure 5 are more than two. Thus, by correspondingly applying the above-described methodology, also in step S2 of Figure 6, the phase shifting of the partials/frequencies of the sound with respect to one another is performed and (e.g., with adding/summing of the partials/frequencies obtained by the phase shifting) result in a composite wave or an output sound respectively, energy and/or power (values) of which are higher than energy and/or power (values) of the original sound, data of which has been obtained in step S1.

According to an example of the present disclosure, the execution of step S2 (as in Figures 5 and 6) may comprise execution of an optimization algorithm. The optimization algorithms are generally well known and are designed to find the best solution to a problem by systematically adjusting parameters to minimize or maximize a specific objective. The present disclosure allows a corresponding implementation of any one of the optimization algorithms as appropriate. According to the example, the optimization algorithm may be implemented such that its objective is maximizing the value indicative of power and/or energy of the output sound.

Thus, in step S2 (as in Figures 5 and 6) the optimization algorithm will adjust the phases (by phase shifting) of at least one of the partials/frequencies obtained correspondingly in step S1 until the highest possible and/or the highest appropriate increase of the power and/or energy in the output sound is achieved. Thus, the value indicative of power and/or energy of the output sound will be the highest possible and/or the highest appropriate value that may be achieved by phase shifting the partials/frequencies obtained in step S1 with respect to one another.

The implementation of the optimization algorithm improves the performance of the execution of step S2 as well as the execution of the whole method. Furthermore, the optimal output sound with the best possible energy and/or power value for the loudspeaker(s) 14 of the vehicle 11 is created.

Generally, when executing step S2 within the scope of any one of the examples disclosed herein, different phase shifts may be performed with regard to the different partials/frequencies. Further, at least one of the partials/frequencies is phase shifted.

Upon the execution of step S2 (as in Figures 5 and 6), a corresponding output sound for the warning device 13 of the vehicle 11 is generated. The output sound of data indicative of the output sound respectively may be stored in a sound file.

According to an example, the output sound file or the output sound (i.e., data indicative of the output sound) may be provided from the data processing apparatus 10 to the vehicle 11. The provision to the vehicle 11 may be performed directly via corresponding direct (wired or wireless) connection between the data processing apparatus 10 and the vehicle 11 or indirectly via at least one other device enabling provision of data (such as data indicative of the output sound or output sound file) to the vehicle.

According to an example, the data processing apparatus 10 my cause storing the output sound file or the output sound in a data storage device such as database, arranged for storing data. The output sound file or the output sound (i.e., data indicative of the output sound), stored in the data storage device, may then be directly or indirectly (i.e., via at least one another device) provided from the data storage device to the vehicle 11.

At the vehicle 11, the obtained output sound or output sound file (i.e., data indicative of the output sound) may be stored, for example, in a storage device of the vehicle 11. Upon that, when the warning device 13 of the vehicle 11 receives an indication of that the output sound or output sound file are to be output, the warning device 13 of the vehicle 11 will cause the outputting/playing back of the output sound or output sound file correspondingly. As explained above, the loudspeaker(s) 14 of the sound system 12 of the vehicle 11 may be caused to execute the corresponding output.

In view of the aforesaid, the disclosure presented herein describes a method generating output/warning sounds or output/warning sound files respectively with sound energy and sound power values increased in view of the requirements of vehicle loudspeakers in an efficient way without changing the characteristics of the original sound itself, energy and/or power of which is improved. For each particular/frequency of the sound, with regard to which a phase adjustment/shifting is done, an independent and individual phase shifting/adjustment is performed such that the sum of the resulting particulars/frequencies leads to an output sound with the highest possible and/or appropriate power and/or energy values. In order to enhance a high number of particulars/frequencies and in order to achieve a best possible result, optimization algorithms can be used, which additionally improves the effectivity of the method. The resulting output sound/output sound file comprises an output sound with an optimized energy and/or power and is obtained without changing the characteristics of the original sound. Additionally, complex signals with many partials/frequencies may be optimized with regard to the desired energy and/or power values in an efficient way.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: data processing apparatus
- 11: vehicle
- 12: sound system
- 13: warning device
- 14: at least one loudspeaker
- 101: data storage unit
- 102: computer-readable storage medium
- 103: computer program
- 104: data processing unit
- 201: partial
- 202: partial
- 203: partial
- 20: composite wave of a sound
- 211: partial
- 212: partial
- 213: partial
- 214: partial
- 215: partial
- 21: composite wave of a sound
- 301: partial
- 302: partial
- 302': phase shifted partial
- 30: composite wave of a sound
- 30': composite wave of an output sound
- 31: value indicative of power and/or energy of a sound
- 31': value indicative of power and/or energy of an output sound
- S11: obtaining first data indicative of a first partial
- S12: obtaining second data indicative of a second partial
- S13: obtaining at least one further data each indicative of a corresponding further partial
- S2: obtaining output data

## Claims

1. A method for generating output data indicative of an output sound for a warning device (13) of a vehicle (11), wherein the method comprises:
- obtaining (S11) first data indicative of a first partial (201 to 203, 211 to 215, 301, 302) of a sound **characterized by** a first frequency;
- obtaining (S12) second data indicative of a second partial (201 to 203, 211 to 215, 301, 302) of the sound **characterized by** a second frequency; and
- obtaining (S2) the output data indicative of the output sound by combining the first data and the second data, wherein the combining comprises a phase shifting of the first partial (201 to 203, 211 to 215, 301, 302) of the sound and the second partial (201 to 203, 211 to 215, 301, 302) of the sound with respect to one another, and wherein a value (30') indicative of power and/or energy of the output sound is higher than a value (30) indicative of power and/or energy of the sound.

2. The method according to claim 1, wherein the value (30) indicative of power and/or energy of a sound is obtained based on a root-mean-square value and/or a crest factor.

3. The method according to any one of the preceding claims, wherein the method further comprises obtaining (S13) at least one further data each indicative of a corresponding further partial (201 to 203, 211 to 215, 301, 302) of the sound **characterized by** a corresponding frequency, wherein the obtaining (S2) the output data indicative of the output sound comprises combining the first data, the second data, and the at least one further data by phase shifting of the first partial (201 to 203, 211 to 215, 301, 302) of the sound, the second partial (201 to 203, 211 to 215, 301, 302) of the sound, and the at least one further partial (201 to 203, 211 to 215, 301, 302) of the sound with respect to one another, and wherein the value (30') indicative of power and/or energy of the output sound is higher than the value (30) indicative of power and/or energy of the sound.

4. The method according to any one of the preceding claims, wherein the obtaining (S2) of the output data indicative of the output sound is performed by applying an optimization algorithm.

5. The method of claim 4, wherein the optimization algorithm has an objective of maximizing the value (30') indicative of power and/or energy of the output sound.

6. The method according to any one of the preceding claims, wherein, upon the obtaining (S2) of the output data indicative of the output sound, the method comprises:
- storing the output data as a sound file; and/or
- providing the sound file or the output data for outputting by the warning device (13) of the vehicle (11); and/or
- causing outputting of the sound file or the output sound, of which the output data is indicative by the vehicle (11).

7. The method according to any one of the preceding claims, wherein the first data is indicative of a sine wave of the first frequency and the second data is indicative of a sine wave of the second frequency.

8. A data processing apparatus (10) comprising means for carrying out the steps of a method of any one of the preceding claims.

9. A computer program (103) comprising instructions which, when the program (103) is executed by a computer, cause the computer to carry out the steps of a method of any one of the claims 1 to 7.

10. A computer-readable storage medium (102) comprising instructions which, when executed by a computer, cause the computer to carry out the steps of a method of any one of the claims 1 to 7.

11. A sound system (12) for a vehicle (11) comprising a loudspeaker (14), wherein the sound system (12) is configured for:
- obtaining output data indicative of an output sound, generated by the data processing apparatus (10) according to claim 8; and
- causing the loudspeaker (14) of the vehicle (11) to output the output sound.

12. A use of output data, generated by executing the steps of a method of any one of the claims 1 to 7, in a sound system (12) of a vehicle (11).

13. A vehicle (11) comprising a sound system (12) according to claim 11.
